# EUROPEAN PATENT SPECIFICATION

(11) **EP 1 770 311 B1**
(45) Date of publication and mention of the grant of the patent: **10.12.2008**
(21) Application number: 06380248.2
(22) Date of filing: 18.09.2006
(51) Int. Cl.: F16H 59/08, F16H 59/12

(54) **Integrated start-up, stop, mode selection and gear-shift device for a vehicle**
Vorrichtung mit integriertem Motor Start/Stop-Mechanismus, Betriebsartauswahlmechanismus und Schaltmechanismus für Kraftfahrzeug
Dispositif intégré de STOP/START de sélection de mode de fonctionnement et de commande pour un véhicule

(30) Priority: 30.09.2005 ES 200502438
(43) Date of publication of application: 04.04.2007
(73) Proprietor: Fico Triad S.A., 08028 Barcelona (ES)
(72) Inventor: Pujol Artigas, Josep Maria, 08028 Barcelona (ES); Prat Terrades, Jaume, 08028 Barcelona (ES)
(74) Representative: SUGRANES - VERDONCES - FERREGÜELA

(56) References cited:
- DE-A1- 10 126 129
- DE-A1- 10 126 132
- DE-A1- 19 706 625
- DE-A1- 19 754 250
- DE-A1- 19 961 375
- US-B1- 6 295 887

## Description

### Field of the art

The present invention concerns an integrated start-up, stop, mode selection and gear-shift control device for a vehicle, in particular for a vehicle equipped with an electronically controlled automatic gearbox, according to the preamble of claim 1.

### Prior art

The type of vehicle equipped with an electronically controlled automatic gearbox, with a device designed to start up and stop the engine, generally controlled by a key or similar, which makes it possible to start up and stop the vehicle engine, a mode selection control and a manual gear-shift control, is well-known. The mode selection control may adopt different positions to select the gear-shift mode, and usually allows changing between a neutral mode or dead centre (generally indicated by "N"), a parking mode (generally indicated by "P"), a reverse mode (generally indicated by "R"), an automatic gear-shift mode (generally indicated by "D") and a manual gear-shift mode (generally indicated by "M"). The manual gear-shift control is only operative when the mode selection control is in the position corresponding to the manual gear-shift mode, and makes it possible to manually change the gearbox's different transmission ratios.

The mode selection control is directly related to the engine start-up and stop device, such that the engine may only be started when the mode selection control is in a given position, for example, in neutral or parking position.

Integration of the mode selection control and the manual gear-shift control in the same lever, which may follow two circuits, a first circuit that includes the various mode selection positions and another circuit with the manual gear-shift positions, is known. A button incorporated in the lever makes it possible to go from the corresponding position to manual gear-shift mode "M", from the mode selection circuit to the manual gear-shift circuit.

It is common for the manual gear-shift control, whether in the form of a lever or another device, to act in a sequential manner. That is, from a stable neutral position, the control may be taken to an "up" position (generally indicated by the "+" sign) in order to upshift one gear, or a "down" position (generally indicated by the "-" sign) in order to downshift one gear, where the "up" and "down" positions are unstable, such that the control always automatically returns to the above-mentioned neutral position, which is stable.

Document WO 2001/31232 discloses a gear-shift device for an electronically controlled automatic gearbox for a vehicle, wherein the manual gear-shift control has, in addition to the above-mentioned "up" position (indicated by the "+" sign) to upshift one gear, and the "down" position (indicated with the "-" sign) to downshift one gear, the additional positions "upshift to the maximum" (indicated by the "+ +" sign), to upshift to the highest gear, and "downshift to the maximum" (indicated by the "- -" sign), to downshift to the lowest gear. In an embodiment example, the mode selection control is a lever that may be arranged in the classic "N", "P", "R", "D" and "M" positions, and the manual gear-shift control is placed separately, for example, on the steering wheel, and takes the shape of a rocking double-key pushbutton with one of the keys designed for the "+" and "+ +" positions, and the other for the "-" and "- -" positions. In another embodiment example, the manual gear-shift control is also separate from the mode-shift control and takes the shape of a rotary knob that reaches the "+" and "+ +" positions by rotating in one direction and the "-" and "- -" positions by rotating in the opposite direction.

Patent US-A-6661114 presents a gear-shift device for motor vehicles that includes a plurality of keys adapted to select the mode upon being pressed, and a rotary knob, located next to the above-mentioned keys, which acts as an engine start-up and stop control. In this device, the keys only include the "N", "R" and "D" options, for which reason it is not possible to manually shift gears and, consequently, a specific control is not necessary for this purpose. A device interacts between the keys and the start-up and stop control to make it possible to start the engine, for example, only when the "N" button is pressed.

The closest prior art document DE 10126129-A1 discloses a shift apparatus for shifting gears in a vehicle driven by an engine. The shift apparatus includes a support base, a fixed base, a rotary knob and a push button. The housing formed by the support base and the fixed base contains an antenna coil, a controller and a solenoid actuated by a plunger. The knob functions as a shift selector (P, R, N, D) and is rotationally mounted on the fixed base about an axis which is perpendicular to the plane of the knob, whereas the push button, which moves linearly in the plane of the knob, inside a guide portion provided on the knob, functions as an engine start actuator by means of its arrangement with regard to the plunger of the solenoid. The plunger passes through a hole in the housing wall and engages with the knob preventing the rotation of the knob and the pushing of the pushing button, unless a transponder key transmission is received by the coil and recognised by the controller which also requires a brake engaged signal to withdraw the plunger. Such apparatus does not integrate a manual gear-shift mode "M" or the function for an upshift "+" and downshift "-" of one gear

Patent US-A-6295887 discloses a compact gear-shift device which, in an embodiment example, comprises a rotary mode selection control associated with an engine start-up and stop control. The mode selection control is configured in such a way that, in order to shift modes, it is necessary to combine a rotary movement of the control with a telescopic movement of the control in the direction of its rotational axis. In addition, it includes a mechanical connection between the mode selection control and the start-up and stop control which makes it possible to operate the start-up and stop control for engine start-up only when the mode selection control is in a pre-determined position, for example, parking mode "P" or neutral mode "N". This embodiment example does not include the manual gear-shift mode "M" option and, consequently, does not include a manual gear-shift control for the classic "+" and "-" positions.

Patent US-A-6564661 discloses a retractable gear-shift device equipped with a reset function. The device comprises a rotary knob which acts as a mode selection control for the "P", "R", "N", D" and "L" options, where "L" corresponds to a gear-down mode. Manual gear-shift mode "M" is not foreseen and, consequently, it does not include a manual gear-shift control. The upper portion of the rotary knob contains a display screen which shows the mode selected at each time. The positions corresponding to the "P", "R", "N", D" and "L" modes are not pre-assigned on the rotary knob; instead, rotation of the knob in one direction from any position "requires" a shift to the next option in the PRNDL mode series in this direction, and rotation in the opposite direction "requires" a shift to the next option in the PRNDL mode series in the opposite direction. An electronic control connected to a series of sensors authorises the mode shift only when certain pre-determined vehicle operating conditions detected by the sensors are met. If these conditions are not met, the shift is not performed and the screen once again shows the mode selected prior to the shift "request". The electronic control resets the positions of the PRNDL series automatically, without the need to physically return the rotary knob to the previous position. As a safety measure, and in accordance with industrial regulations, the upper central portion of the rotary knob, where the display screen is located, may be pressed inward against the thrust force of a spring to operate a validation switch, in such a way that it is necessary to perform two operations to "request" a mode shift: rotating the rotary knob and pressing the validation button, in order to prevent an accidental mode shift.

### Description of the invention

The purpose of this invention is to provide a control device equipped with a single control that integrates the start-up, stop, mode selection and sequential manual gear-shift functions, for a vehicle equipped with an electronically controlled automatic gearbox.

This invention contributes to achieving the above-mentioned and other purposes by providing an integrated start-up, stop, mode selection and gear-shift control for a vehicle equipped with an electronically controlled automatic gearbox, having the features of claim 1.

The knob is composed of an internal part guided on a base flange in order to rotate and linearly move with respect to the first axis, and an accessible part joined to said internal part in order to rock with respect to said second axis.

The above-mentioned internal part and accessible part may be separate parts joined to one another, for example, by means of an articulation pin inserted in respective aligned holes, or they may be a single piece equipped, for instance, with a narrowing that provides a hinge effect due to the elasticity or flexibility of the material. Guiding of the translational and rotational movements with respect to the first axis is performed, for example, by means of shape interlocking between some surfaces of the above-mentioned base flange and the corresponding surfaces of the internal part of the knob.

A positioning device is linked to the base flange on one side and to the internal part of the knob on the other, and acts to provide stability to the knob in each of the above-mentioned angular positions when the knob rotates around the first axis. This positioning device does not hinder rotation of the knob, but, instead, provides the knob, when it is rotating, with a tendency to position itself and stop at one of the pre-set angular positions, transmitting the unequivocal sensation of having reached one of said angular positions to the user. In an embodiment example, the knob's angular positions correspond to the classic P, R, N, D, M modes of many gearbox control devices, where P is a parking mode, R is a reverse mode, N is a neutral mode, also called dead centre, D is a forward gear mode with automatic gear shift and M is a forward gear mode with manual gear shift.

The device disclosed in this invention comprises an angular position detector which has a fixed part joined to the base flange and a moving part linked to the internal part of the knob. Therewith, the above-mentioned angular position detector is capable of generating at least one mode signal indicating the angular position detected when said angular position detector is operated by rotating the knob around the first axis. The above-mentioned start-up/stop switch also has a fixed part joined to the base flange and a moving part joined to the internal part of the knob, in such a way that linear downward movements of the knob in the direction of the first axis operate the start-up/stop switch in order to alternatively generate at least one vehicle engine start-up signal and at least one vehicle engine stop signal. Advantageously, the angular position detector, the start-up/stop switch and a first elastic element designed for return of the knob are integrated in the same commercially available component.

The above-mentioned upshift and downshift switches are mounted on the base flange in diametrically opposed positions, and the accessible part of the knob comprises corresponding attachments which are adapted so as to face, respectively, the upshift and downshift switches when the knob is in the running engine axial position and in angular position M corresponding to the manual gear-shift mode. Rocking movements of the accessible part of the knob around the second axis from a central neutral position operate one or another of the upshift and downshift switches in order to generate at least one upshift or downshift signal, respectively. One or more second elastic elements are arranged in order to return the accessible part of the knob to said central neutral position.

With this construction, using the control in this invention installed in a vehicle equipped with an electronically controlled automatic gearbox, it is possible to perform the operations of engine start-up and stop, mode selection and sequential gear shifting in manual mode by means of small movements of a single knob.

One of the advantages of this invention is that, when the knob is in the axial position corresponding to the stopped engine, the knob is retracted and may not be grasped. Therefore, operating mode selections are only possible when the knob is in the axial position corresponding to the running engine, wherein it may be comfortably grasped in order to rotate it around the first axis.

### Brief description of the drawings

The above-mentioned and other advantages and characteristics may be more fully understood thanks to the following detailed description of an embodiment example with reference to the attached drawings, wherein:
- Figs. 1 to 4: are schematic cross-section views which show the control's basic elements according to an embodiment example of this invention in different operating positions;
- Fig.5: is a schematic section plan view which shows a control positioning device; and
- Figs. 6 to 8: are perspective views of the control in different operating positions.

### Detailed description of an embodiment example

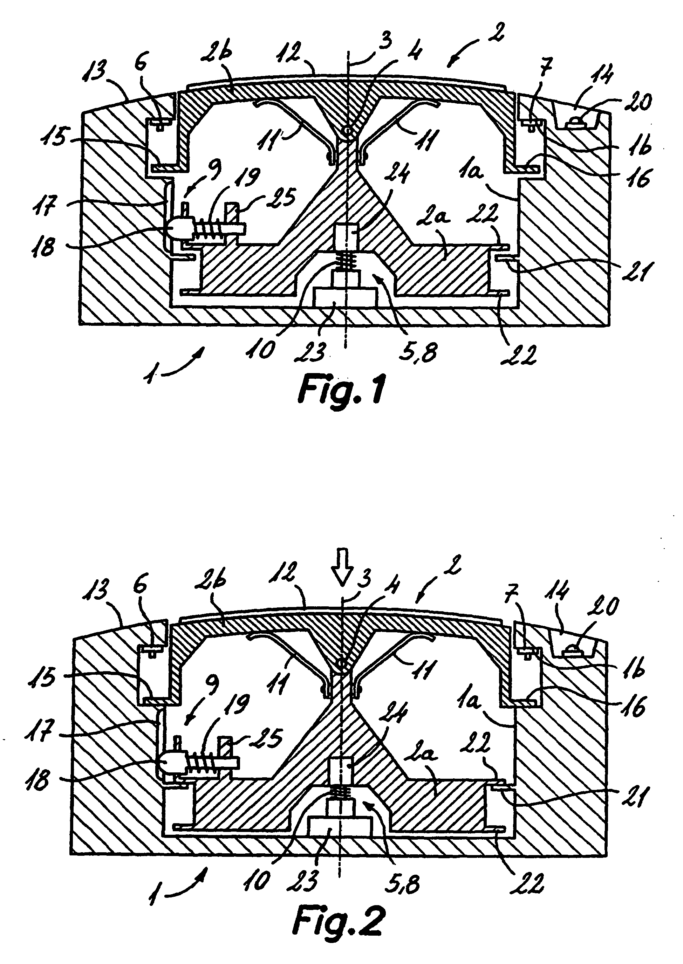

Referring, in the first place, to Figs. 1 to 4, the integrated start-up, stop, mode selection and gear-shift control for a vehicle equipped with an electronically controlled automatic gearbox comprises, according to an embodiment example of the invention, a base 1 that is adapted to be fixed onto the vehicle and a knob 2 assembled on said base 1. This knob 2 comprises an internal part 2a, which is guided on a flange 1a of the base 1, in such a way that it is capable of rotating around a first axis 3 and also linearly moving along this same first axis 3. A projection 21 is formed on the flange 1a of the base 1 which extends inside a space that is axially delimited by two annular shelves 22 formed on the periphery of the internal part 2a of the knob 2. The above-mentioned projection 21 co-operates with both annular shelves 22 in order to limit the axial trajectory of the knob 2 in its linear displacements in the direction of the first axis 3.

The knob 2 also comprises an accessible part 2b, which is joined to said internal part 2a in such a way that it is capable of rocking with respect to a second axis 4 that is perpendicular to first axis 3. In the embodiment example shown in the figures, the internal part 2a and the accessible part 2b of the knob 2 are different parts joined by an articulation pin inserted in respective holes and aligned with the second axis 4, although they could also be made of one piece, wherein a narrowing aligned with the second axis 4 would provide said articulation, with an equivalent outcome. In any event, the rotational and/or moving actions with respect to the first axis 3 applied on the accessible part 2b of the knob 2 are transmitted to the internal part 2a, in such a way that the internal part 2a and the accessible part 2b move jointly. On the contrary, rocking movements around the second axis 2 only affect the accessible part 2b.

The control includes a start-up/stop switch 5, which has a fixed part 23 that is joined to the flange 1 a of the base 1 and a button 24 joined to the internal part of the knob 2. The above-mentioned fixed part 23 and the button 24 are connected by a shank, around which a first elastic element 10 in the form of a helicoidal compression spring is installed.

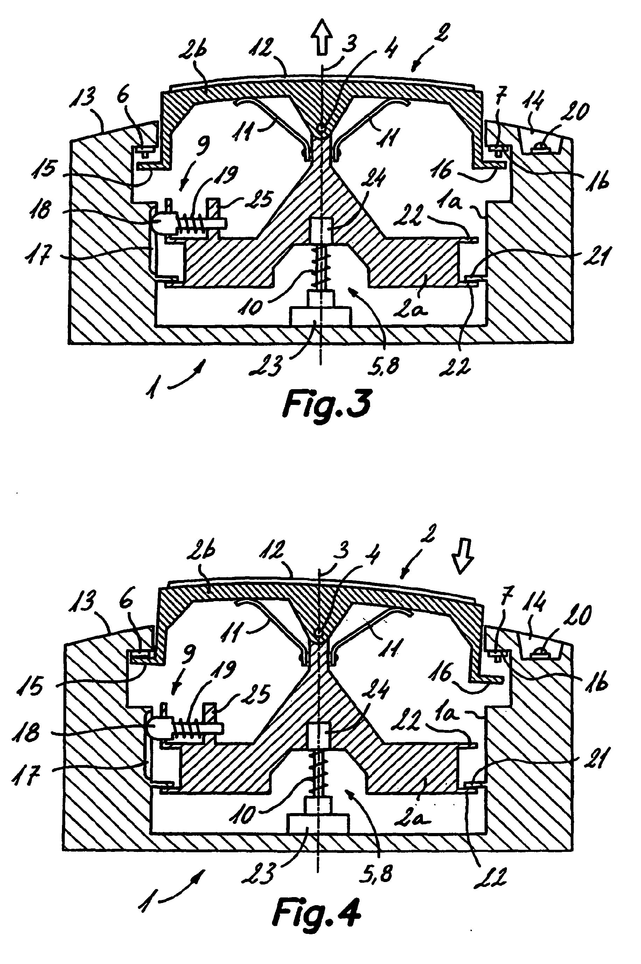

Linear movements of the knob 2 in the direction of said first axis 3, inwards towards the flange 1 a of the base 1 and against the thrust of said first elastic element 10, make it possible to operate the start-up/stop switch 5 to alternatively generate at least one vehicle engine start-up signal and at least one vehicle engine stop signal. The construction of the start-up/stop switch 5 is such that, when the vehicle engine is running, the start-up/stop switch 5 is operated to stop the vehicle engine by means of a first linear movement of the knob 2 inwards. Following this first movement, the first elastic element 10 returns the knob 2 to a first axial position corresponding to the stopped engine, wherein the accessible part 2b of the knob 2 is retracted inside the flange 1 a of the base 1 and cannot be grasped (Fig. 1). When the vehicle engine is stopped, the start-up/stop switch 5 is operated to start up the vehicle engine by means of a second linear movement of the knob 2 inwards (Fig. 2). When, subsequently, the knob 2 is released, the first elastic element 10 returns the knob 2 to a second axial position corresponding to the running engine, wherein the accessible part 2b of the knob 2 projects from the base 1 and may be grasped in order to select the operating mode (Fig. 3). Therefore, the first and second movements of the knob 2 inwards alternate in a chained manner and, between the first and second axial positions of the knob 2 (Figs. 1 and 3, respectively), or vice versa, it is always necessary to go through the axial position of greatest sinkage of the knob 2 inside the flange 1a of the base 1 (shown in Fig. 2) in order to operate the start-up/stop switch 5.

By rotating around said first axis 3, the knob 2 may adopt several angular positions, P, R, N, D, M, corresponding to different operating modes of said gearbox. In the embodiment example shown, angular position P corresponds to a parking mode, angular position R corresponds to a reverse mode, angular position N corresponds to a neutral mode, also called dead centre, angular position D corresponds to a forward mode with automatic gear shift and angular position M corresponds to a forward mode with manual gear shift.

The control comprises an angular position detector 8 linked to said flange 1 a of the base 1 and to the internal part 2a of the knob 2, in such a way that said angular position detector 8 is operated by rotating the knob 2 around the first axis 3 in order to detect in which of said angular positions P, R, N, D, M the knob 2 is placed and to generate at least one mode signal indicating the detected angular position P, R, N, D, M. Advantageously, the start-up/stop switch 5, including the first elastic element 10, and the angular position detector 8 are integrated in the same commercially available component, which comprises the first part 23 and the button 24 connected by a shank. Rotating the button 24 around the shank with respect to the first part 23 operates the angular position detector 8 and pressing the button 24 along the shank towards the first part 23 operates the start-up/stop switch 5, as explained above. In the control in this invention, the 5, 8 component, which integrates the start-up/stop switch 5 and the angular position detector 8, is located in a centred position, with the shank aligned with the first axis 3.

Moreover, the control includes positioning device 9 linked to the flange 1a of the base 1 and to the internal part 2a of the knob 2 in order to provide stability to the knob 2 for each of said series of angular positions P, R, N, D, M when the knob 2 is rotated around the first axis 3. Positioning device 9 also transmits an unequivocal sensation to the user when the knob 2 has reached any one of said angular positions P, R, N, D, M. Additionally, the control may include a device with limit switches 27, 28 designed to limit the rotation of the knob to the range of angular positions P, R, N, D, M.

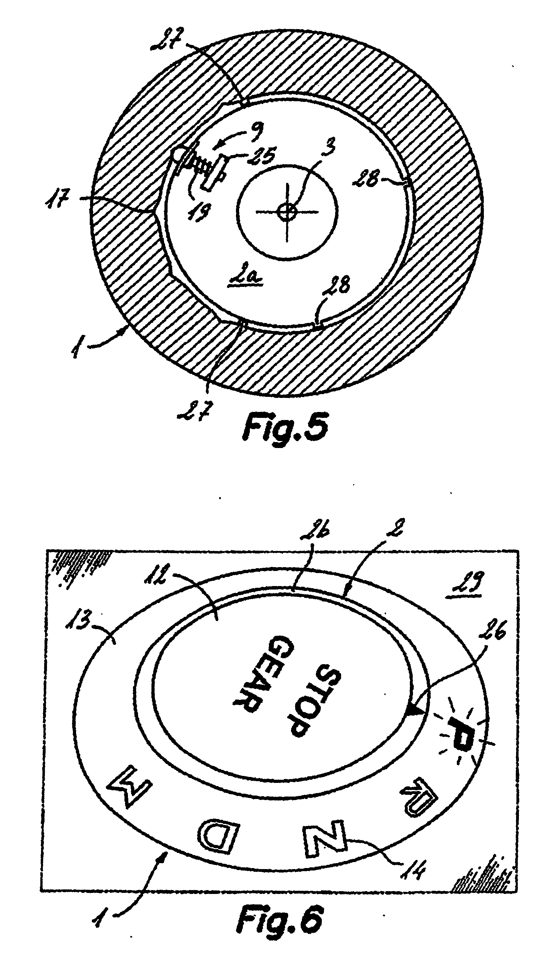

Fig. 5 shows an embodiment example of positioning device 9 which comprises a series of ducts 17 parallel to the first axis 3, formed in an internal surface of said flange 1a of the base 1, in positions corresponding to angular positions P, R, N, D, M. A moving member 18 is mounted on guide supports 25 placed on the internal part 2a of the knob 2, in such a way that it may be moved in a radial direction towards said ducts 17. A third elastic element 19 in the form of a helicoidal compression spring is placed around moving member 18 to push moving member 18 towards the above-mentioned internal surface of the flange 1a of the base 1 in order to insert a rounded end of moving member 18 in one of ducts 17 when the knob 2 is rotated around the first axis 3. Projections 27 formed on the base 1 interact with corresponding projections 28 formed on the internal part 2a of the knob 2 in order to provide the above-mentioned limit switches that limit the rotation of the knob to the range angular positions P, R, N, D, M.

When the knob 2 is in the second axial position and in angular position M corresponding to a manual gear-shift mode (Fig. 3), the above-mentioned rocking movement of the accessible part 2b of the knob 2 around the second axis 4 is used to operate upshift and downshift switches 6, 7, which, in the embodiment example shown in Figs. 1 to 4, are mounted in diametrically opposed positions on a shelf 1 b of the flange 1 a of the base 1. When the knob is placed in this angular position M, the second axis 4 is in a position that is substantially perpendicular to an imaginary line joining the diametrically opposed positions of upshift and downshift switches 6, 7, and the accessible part 2b of the knob 2 comprises first and second attachments 15, 16 which are adapted so as to face, respectively, upshift and downshift switches 6, 7 when the knob 2 is in said second axial position and in angular position M (Fig. 3).

Therefore, by applying pressure on an upper surface of the accessible part 2b of the knob 2, on a first side of the second axis 4, a rocking movement is produced in the accessible part 2b of the knob 2 around the second axis 4 in a first direction from a central neutral position, and the above-mentioned first attachment 15 operates upshift switch 6, which generates at least one upshift signal. Similarly, by applying pressure on said upper surface of the accessible part 2b of the knob 2, on a second side of the second axis 4, a rocking movement is produced in the accessible part 2b of the knob 2 around the second axis 4 in a second direction from said central neutral position, and the above-mentioned second attachment 16 drives downshift switch 7, which generates at least one downshift signal. The rocking movements of the accessible part 2b of the knob 2 around the second axis 4 are made against the thrust of at least a second elastic element 11 arranged so as to return the accessible part 2b of the knob 2 to the central neutral position following operation of one or another of upshift and downshift switches 6, 7. In the embodiment example shown, second elastic element 11 takes the shape of a pair of elastic tongues fixed onto the internal part 2a of the knob 2 and equipped with respective free ends that lean against internal surfaces of the accessible part 2b on both sides of the second axis 4. With special reference to Figs. 6 to 8, they represent the control of this invention with the base 1 fixed onto a support surface 29 inside the vehicle cockpit, at the driver's disposal. A display device 12 is located on an external surface of the accessible part 2b of the knob 2, connected to electronic elements in order to show changing information about the control's features in relation to the positions of the knob 2 with respect to the base 1. The display device may be of any type known in the art, such as, for example, a liquid crystal screen. Moreover, on an external annular surface 13 of the base 1, in an area around the knob 2, marks 14 are placed which correspond to the various angular positions P, R, N, D, M, and the control comprises an indicator element 26 associated with the rotational movement of the knob 2 to successively indicate each of said marks 14 when the knob 2 is rotated around the first axis 3. In an embodiment example, this indicator element comprises light-emitting devices 20, each associated with one of marks 14 and connected to electronic elements. The above-mentioned light-emitting devices 20 are adapted so as to selectively light up according to the angular position P, R, N, D, M of the knob 2 detected by the angular position detector 8. Alternatively or concurrently, the indicator element comprises a pointer 26 mounted and/or painted on the accessible part 2b of the knob 2 and arranged so as to indicate the different marks 14 as the knob 2 is rotated around the first axis 3.

For example, Fig. 6 represents the knob 2 in the first axial position, corresponding to the stopped engine; for this reason, the knob 2 is retracted in the base 1 and cannot be grasped. The display device 12 is lit and indicates, for example, STOP GEAR, to indicate to the users that, in order to start the engine, they may press the knob 2 towards the interior of the base 1, as described above. In addition, in Fig. 6, the knob 2 is in angular position P, corresponding to a parking mode, for which reason light-emitting device 20 associated with the mark 14 corresponding to angular position P is on and pointer 26 indicates this same mark 14 corresponding to angular position P.

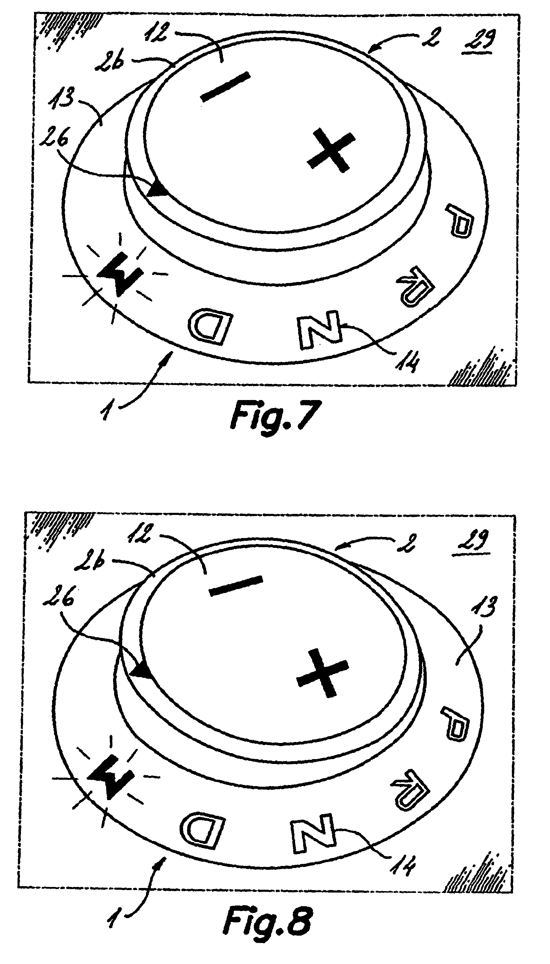

In Fig. 7, the knob 2 is in the second axial position, such that the accessible part 2b may be grasped in order to rotate the knob 2 around the first axis 3, and the display device 12 would continue to be lit indicating, for example, STOP GEAR. However, in this Fig. 7, the knob has been rotated to angular position M, corresponding to the manual gear-shift mode, for which reason the display device 12 changes to indicate "+, -" in the areas of the accessible part 2b which the user may press in order to upshift or downshift, respectively, as described above. Furthermore, light-emitting device 20 associated with the mark 14 corresponding to angular position M is on and pointer 26 indicates this same mark 14 corresponding to angular position M. Optionally, the light-emitting device 20 associated with the mark 14 corresponding to angular position P emits light of one colour, for example, red, different from the light emitted by the light-emitting devices 20 associated with the rest of marks 14, which is, for example, green. Obviously, other combinations of positions and colours are possible.

In Fig. 8, the knob 2 is in the second axial position and in the same angular position M as in Fig. 7. However, in this case the accessible part 2b of the knob 2 has been pressed on the "+" sign shown in the display device 12, for which reason the accessible part 2b of the knob 2 has oscillated with respect to the second axis 4 (see also Fig. 4) in order to operate upshift switch 6. A similar action on the "-" sign shown on the display device 12 would make the accessible part 2b of the knob 2 oscillate in the opposite direction in order to operate downshift switch 7.

Anyone skilled in the art will be capable of introducing variations and modifications in the embodiment example shown and described without going beyond the scope of this invention as defined in the attached claims.

## Claims

1. An integrated start-up, stop, mode selection and gear-shift control for a vehicle equipped with an electronically controlled automatic gearbox, and it comprises a base (1) that is adapted to be fixed onto the vehicle and a knob (2) mounted on said base (1) in such a way that said knob may be linearly moved in the direction of a first axis (3) in order to operate an engine start-up/stop switch (5), rotated around said first axis (3) to adopt several angular positions (P, R, N, D, M) corresponding to different operating modes of said gearbox, **characterised in that** said knob (2) may be rocked around a second axis (4), perpendicular to said first axis (3), in order to operate an upshift switch (6) and a downshift switch (7); and **in that** said knob (2) comprises an internal part (2a) guided on a flange (1a) of the base (1) in order to rotate and linearly move with respect to the first axis (3), and an accessible part (2b) joined to said internal part (2a) in order to rock with respect to said second axis (4).

2. Control, according to claim 1, **characterised in that** the internal part (2a) and said accessible part (2b) are two parts joined by an articulation that is aligned with the second axis (4).

3. Control, according to any of claims 1 or 2, **characterised in that** it comprises an angular position detector (8) linked to said flange (1a) of the base (1) and to the internal part (2a) of the knob (2), in such a way that said angular position detector (8) is operated by rotating the knob (2) around the first axis (3) in order to detect in which of said angular positions (P, R, N, D, M) the knob (2) is placed and generate at least one mode signal indicating the angular position (P, R, N, D, M) detected.

4. Control, according to claim 3, **characterised in that** said start-up/stop switch (5) is linked to the flange (1a) of the base (1) and to the internal part of the knob (2), in such a way that it is operated by linear movements of the knob (2) in the direction of said first axis (3) in order to alternatively generate at least one vehicle engine start-up signal and at least one vehicle engine stop signal.

5. Control, according to claim 4, **characterised in that** said linear movements of the knob (2) in the direction of said first axis (3) intended to operate the start-up/stop switch (5) are made inwards towards the flange (1a) of the base (1) against the thrust of a first elastic element (10), and comprise one first linear movement inwards wherethrough the start-up/stop switch (5) is operated in order to stop the vehicle engine and, following which, said first elastic element (10) returns the knob (2) to a first axial position wherein the accessible part (2b) of the knob (2) is retracted inside the flange (1a) of the base (1) and cannot be grasped, and a second linear movement inwards wherethrough the start-up/stop switch (5) is operated in order to start the vehicle engine and, following which, the first elastic element (10) returns the knob (2) to a second axial position wherein the accessible part (2b) of the knob (2) projects from the base (1) and may be grasped, said first and second linear movements inwards alternating in a chained manner.

6. Control, according to claim 5, **characterised in that** said upshift switch (6) and said downshift switch (7) are mounted on diametrically opposed positions on a shelf (1b) of the flange (1 a) of the base (1), and the accessible part (2b) of the knob (2) comprises first and second attachments (15, 16) which are adapted so as to face, respectively, the upshift and downshift switches (6, 7) when the knob (2) is in said second axial position and in an angular position (M), amongst the various angular positions (P, R, N, D, M), corresponding to a manual gear-shift mode, for which reason the upshift switch (6) is operated by said first attachment (15) as a consequence of a rocking movement of the accessible part (2b) of the knob (2) around the second axis (4) in a first direction from a central neutral position in order to generate at least one upshift signal, and the downshift switch (7) is operated by said second attachment (16) as a consequence of a rocking movement of the accessible part (2b) of the knob (2) around said second axis (4) in a second, opposite direction from said central neutral position in order to generate at least one downshift signal.

7. Control, according to claim 6, **characterised in that** the rocking movements of the accessible part (2b) of the knob (2) around the second axis (4) are made against the thrust of at least one second elastic element (11) that is arranged so as to return the accessible part (2b) of the knob (2) to the central neutral position following operation of one or another of the upshift and downshift switches (6, 7).

8. Control, according to any of the preceding claims, **characterised in that** it comprises a positioning device (9) linked to the flange (1a) of the base (1) and to the internal part (2a) of the knob (2) designed to provide stability to the knob (2) for each of said series of angular positions (P, R, N, D, M) when the knob (2) is rotated around the first axis (3).

9. Control, according to claim 8, **characterised in that** said positioning device (9) comprises a series of ducts (17) parallel to the first axis (3), formed on an internal surface of said flange (1a) of the base (1) in positions corresponding to the angular positions (P, R, N, D, M), a moving member (18) mounted on the internal part (2a) of the knob (2), and a third elastic element (19) arranged so as to push said moving member (18) towards the internal surface of the flange (1a) of the base (1) in order to insert a rounded end of the moving member (18) in one of said ducts (17) when the knob (2) is rotated around the first axis (3).

10. Device, according to any of the preceding claims, **characterised in that** one external surface of the accessible part (2b) of the knob (2) has a display device (12) connected to electronic elements in order to show changing information regarding at least two features related to positions of the knob (2).

11. Device, according to any of the preceding claims, **characterised in that** it comprises marks (14) corresponding to the various angular positions (P, R, N, D, M) arranged on an external annular surface (13) of the base (1) around the knob (2), and an indicator element associated with the rotational movement of the knob (2) to successively indicate each of said marks (14) when the knob (2) is rotated around the first axis (3).

12. Device, according to claim 11, **characterised in that** said indicator element comprises light-emitting devices (20), each associated with one of the marks (14) and connected to electronic elements, said light-emitting devices (20) being capable of selectively lighting up according to the angular position (P, R, N, D, M) of the knob (2) detected by the angular position detector (8).

13. Device, according to claim 12, **characterised in that** at least one of the light-emitting devices associated with one of the marks (14) corresponding to one of the angular positions (P) emits light of a colour different from the light emitted by the light-emitting devices associated with the rest of the marks (14).

14. Control, according to claim 5, **characterised in that** the start-up/stop switch (5), the angular position detector (8) and the first elastic element (10) are integrated in the same component.

15. Control, according to any of the preceding claims, **characterised in that**, on the flange (1a) of the base (1), at least one projection (21) is formed which extends inside a space that is axially delimited by two annular shelves (22) formed on the periphery of the internal part (2a) of the knob (2), this projection (21) co-operating with both said annular shelves (22) in order to limit the trajectory of the linear movements of the knob (2) in the direction of the first axis (3).

## Patentansprüche

1. Integrierte Steuerung zum Starten, Stoppen, Wählen des Betriebsmodus und Gangschaltung für ein mit einem elektronisch gesteuerten automatischen Getriebe ausgestattetes Fahrzeug, und die eine Basis (1), die zur Befestigung an dem Fahrzeug angepasst ist, und einen an der genannten Basis (1) montierten Knauf (2) umfasst, so dass der genannte Knauf linear in Richtung einer ersten Achse (3) bewegt werden kann, um einen Motorstart-/stoppschalter (5) zu betätigen, der um die genannte erste Achse (3) rotiert, um mehrere Winkelpositionen (P, R, N, D, M) anzunehmen, die unterschiedlichen Betriebsmodi des genannten Getriebes entsprechen, **dadurch gekennzeichnet, dass** der genannten Knauf (2) um eine zweite Achse (4) geschwungen werden kann, die senkrecht zur genannten ersten Achse (3) ist, um einen Hoch-Schalter (6) und einen Runter-Schalter (7) zu betätigen; und dass der genannten Knauf (2) ein inneres Teil (2a) umfasst, das auf einem Flansch (1 a) der Basis (1) geführt ist, um bezüglich der ersten Achse (3) zu rotieren und sich linear zu bewegen, und ein zugängliches Teil (2b), das mit dem genannten inneren Teil (2a) verbunden ist, um bezüglich der zweiten Achse (4) zu schwingen.

2. Steuerung nach Anspruch 1, **dadurch gekennzeichnet, dass** das innere Teil (2a) und das genannte zugängliche Teil (2b) zwei Teile sind, die durch eine Gelenkverbindung verbunden sind, die mit der zweiten Achse (4) ausgerichtet ist.

3. Steuerung nach einem der Ansprüche 1 oder 2, **dadurch gekennzeichnet, dass** sie einen Winkelpositionsdetektor (8) umfasst, der mit dem genannten Flansch (1a) der Basis (1) und mit dem inneren Teil (2a) des Knaufs (2) verbunden ist, so dass der genannte Winkelpositionsdetektor (8) durch Rotieren des Knaufs (2) um die erste Achse (3) betätigt wird, um zu detektieren, in welcher der genannten Winkelpositionen (P, R, N, D, M) der Knauf (2) positioniert ist, und zumindest ein Betriebssignal zu erzeugen, das die detektierte Winkelposition (P, R, N, D, M) angibt.

4. Steuerung nach Anspruch 3, **dadurch gekennzeichnet, dass** der genannte Motorstart-/stoppschalter (5) mit dem Flansch (1 a) der Basis (1) und mit dem inneren Teil des Knaufs (2) verbunden ist, so dass er durch lineare Bewegungen des Knaufs (2) in Richtung der genannten ersten Achse (3) betätigt wird, um alternativ zumindest ein Fahrzeugmotorstartsignal und zumindest ein Fahrzeugmotorstoppsignal zu erzeugen.

5. Steuerung nach Anspruch 4, **dadurch gekennzeichnet, dass** die genannten linearen Bewegungen des Knaufs (2) in Richtung der genannten ersten Achse (3), die zum Betätigen des Start-/stoppschalters (5) vorgesehen sind, nach Innen zum Flansch (1 a) der Basis (1) hin gegen den Schub eines ersten elastischen Elements (10) gemacht sind, und eine erste lineare Bewegung nach Innen aufweisen, wodurch der Start-/stoppschalter (5) betätigt wird, um den Fahrzeugmotor zu stoppen, und worauf das genannte erste elastische Element (10) den Knauf (2) zu einer ersten axialen Position zurückführt, in welcher das zugängliche Teil (2b) des Knaufs (2) innerhalb des Flansches (1 a) der Basis (1) eingezogen wird und nicht ergriffen werden kann, und eine zweite lineare Bewegung nach Innen, wodurch der Start-/stoppschalter (5) betätigt wird, um den Fahrzeugmotor zu starten und worauf das erste elastische Element (10) den Knauf (2) zu einer zweiten axialen Position zurückführt, in welcher das zugängliche Teil (2b) des Knaufs (2) von der Basis (2) vorsteht und ergriffen werden kann, wobei die genannten ersten und zweiten linearen Bewegungen nach Innen sich in einer kettenähnlichen Art abwechseln.

6. Steuerung nach Anspruch 5, **dadurch gekennzeichnet, dass** der genannte Hoch-Schalter (6) und der genannte Runter-Schalter (7) auf diametral entgegengesetzten Positionen auf einer Einbauplatte (1 b) des Flansches (1 a) der Basis (1) montiert sind, und das zugängliche Teil (2b) des Knaufs (2) erste und zweite Befestigungen (15, 16) umfasst, die angepasst sind, um jeweils den Hoch- und Runter-Schaltern (6, 7) zugewandt zu sein, wenn der Knauf (2) sich in der genannten zweiten axialen Position befindet, und in einer Winkelposition (M), unter den diversen Winkelpositionen (P, R, N, D, M), entsprechend einem manuellen Gangschaltungsbetrieb, weshalb der Hoch-Schalter (6) durch die genannte erste Befestigung (15) in Folge einer schwingenden Bewegung des zugänglichen Teils (2b) des Knaufs (2) um die zweite Achse (4) in einer ersten Richtung von einer zentralen neutralen Position betätigt wird, um zumindest ein Hochschaltsignal zu erzeugen, und der Runter-Schalter (7) wird durch die genannte zweite Befestigung (16) in Folge einer schwingenden Bewegung des zugänglichen Teils (2b) des Knaufs (2) um die genannte zweite Achse (4) in einer zweiten entgegengesetzten Richtung von der genannten zentralen neutralen Position betätigt wird, um zumindest ein Runterschaltsignal zu erzeugen.

7. Steuerung nach Anspruch 6, **dadurch gekennzeichnet, dass** die schwingenden Bewegungen des zugänglichen Teils (2b) des Knaufs (2) um die zweite Achse (4) herum gegen den Schub zumindest eines zweiten elastischen Elements (11) gemacht werden, welches derart angeordnet ist, um das zugängliche Teil (2b) des Knaufs (2) zur zentralen neutralen Position zurückzuführen, nach der Betätigung des Einen oder des Anderen der Hoch- und Runter-schalter (6, 7).

8. Steuerung nach einem der vorherigen Ansprüche, **dadurch gekennzeichnet, dass** es eine Positionierungsvorrichtung (9) umfasst, die mit dem Flansch (1 a) der Basis (1) und dem inneren Teil (2a) des Knaufs (2) verbunden ist, um eine Stabilität für den Knauf (2) für jede der genannten Winkelpositionsreihe (P, R, N, D, M) bereitzustellen, wenn der Knauf (2) um die erste Achse (3) rotiert wird.

9. Steuerung nach Anspruch 8, **dadurch gekennzeichnet, dass** die genannte Positionierungsvorrichtung (9) eine Reihe an Kanäle (17) umfasst, die parallel zur ersten Achse (3) sind, die auf einer inneren Fläche des genannten Flansches (1 a) der Basis (1) in Positionen gebildet sind, die den Winkelpositionen (P, R, N, D, M) entsprechen, ein bewegliches Element (18), das auf dem inneren Teil (2a) des Knaufs (2) montiert ist, und ein drittes elastisches Element (19), das derart angeordnet ist, um das genannte bewegliche Element (18) zur inneren Fläche des Flansches (1a) der Basis (1) hin zu drücken, um ein abgerundetes Ende des beweglichen Elements (18) in einem der genannten Kanäle (17) einzuführen, wenn der Knauf (2) um die erste Achse (3) rotiert wird.

10. Vorrichtung nach einem der vorherigen Ansprüche, **dadurch gekennzeichnet, dass** eine äußere Fläche des zugänglichen Teils (2b) des Knaufs (2) eine Bildschirmvorrichtung (12) hat, die mit elektronischen Elementen verbunden ist, um sich ändernde Informationen bezüglich zumindest zwei Merkmalen anzuzeigen, die sich auf Positionen des Knaufs (2) beziehen.

11. Vorrichtung nach einem der vorherigen Ansprüche, **dadurch gekennzeichnet, dass** sie Markierungen (14) umfasst, die den diversen Winkelpositionen (P, R, N, D, M) entsprechen, die auf einer äußeren ringförmigen Fläche (13) der Basis (1) um den Knauf (2) herum angeordnet sind, und ein Anzeigeelement, das der rotierenden Bewegung des Knaufs (2) zugeordnet ist, um jede der genannten Markierungen (14) nacheinander anzuzeigen, wenn der Knauf (2) um die erste Achse (3) rotiert wird.

12. Vorrichtung nach Anspruch 11, **dadurch gekennzeichnet, dass** das genannte Anzeigeelement lichtemittierende Vorrichtungen (20) umfasst, wobei jede einer der Markierungen (14) zugeordnet ist, und mit elektronischen Elementen verbunden ist, wobei die genannten lichtemittierenden Vorrichtungen (20) wahlweise nach der vom Winkelpositionsdetektor (8) detektierten Winkelposition (P, R, N, D, M) des Knaufs (2) aufleuchten können.

13. Vorrichtung nach Anspruch 13, **dadurch gekennzeichnet, dass** zumindest eine der lichtemittierenden Vorrichtungen, die einer der einer Winkelpositionen (P) entsprechenden Markierungen (14) zugeordnet sind, Licht emittiert, das eine andere Farbe hat als das durch die den restlichen Markierungen (14) zugeordneten lichtemittierenden Vorrichtungen emittierte Licht.

14. Steuerung nach Anspruch 5, **dadurch gekennzeichnet, dass** der Start-/stoppschalter (5), der Winkelpositionsdetektor (8) und das erste elastische Element (10) im selben Bauteil eingebaut sind.

15. Steuerung nach einem der vorherigen Ansprüche, **dadurch gekennzeichnet, dass** auf dem Flansch (1 a) der Basis (1) zumindest ein Überstand (21) gebildet ist, der sich innerhalb eines Raums erstreckt, der von zwei ringförmigen Einbauplatten (22) axial begrenzt ist, die auf dem Umfang des inneren Teils (2a) des Knaufs (2) gebildet sind, wobei dieser Überstand (21) mit den genannten beiden ringförmigen Einbauplatten (22) zusammenwirkt, um den Weg der linearen Bewegungen des Knaufs (2) in Richtung der ersten Achse (3) zu begrenzen.

## Revendications

1. Commande de démarrage, d'arrêt, de sélection de mode et de changement de vitesse pour un véhicule équipée d'une boîte à vitesse automatique à commande électronique, et qui comprend une base (1) qui est adapté pour être fixée sur le véhicule et une poignée (2) montée sur ladite base (1) de telle manière que ladite poignée peut se déplacer linéairement dans la direction d'un premier axe (3) afin d'opérer un commutateur de démarrage/arrête du moteur (5), tourné autour dudit premier axe (3) pour adopter diverses positions angulaires (P, R, N, D, M) correspondant à différents modes d'opération de ladite boîte à vitesses, **caractérisée en ce que** ladite poignée (2) peut se balancer autour d'un second axe (4), perpendiculaire audit premier axe (3), afin d'opérer un commutateur de montée de rapport (4) et un commutateur de descente de rapport (7), et **en ce que** ladite poignée (2) comprend une partie interne (2a) guidée sur un rebord (1a) de la base (1) afin de tourner et se déplacer linéairement par rapport au premier axe (3), et une partie accessible (2b) unie à ladite partie interne (2a) afin de se balancer par rapport audit second axe (4).

2. Commande selon la revendication 1, **caractérisée en ce que** la partie interne (2a) et ladite partie accessible (2b) sont deux parties unies par une articulation qui est alignée avec le second axe (4).

3. Commande selon l'une quelconque des revendications 1 ou 2, **caractérisée en ce qu'**elle comprend un capteur de position angulaire (8) uni audit rebord (1a) de la base (1) et à la partie interne (2a) de la poignée (2), de telle manière que ledit capteur de position angulaire (8) est opéré en faisant tourner la poignée (2) autour du premier axe (3) afin de détecter dans laquelle desdites positions angulaires (P, R, N, D, M) est située la poignée et de générer au moins un signal de mode qui indique la position angulaire (P, R, N, D, M) détectée.

4. Commande, selon la revendication 3, **caractérisée en ce que** ledit commutateur de démarrage/arrêt (5) est uni au rebord (1 a) de la base (1) et à la partie interne de la poignée (2) de telle manière qu'il est opéré par des mouvements linéaires de la poignée (2) dans la direction dudit premier axe (3) afin de générer alternativement au moins un signal de démarrage du moteur du véhicule et au moins un signal d'arrêt du moteur du véhicule.

5. Commande, selon la revendication 4, **caractérisée en ce que** lesdits mouvements linéaires de la poigné (2) dans la direction dudit premier axe (3) destinés à opérer le commutateur de démarrage/arrêt (5) sont réalisés vers l'intérieur vers le rebord (1a) de la base (1) contre la poussée d'un premier élément élastique (10), et ils comprennent un premier mouvement linéaire vers l'intérieur par le biais duquel le commutateur de démarrage/arrêt (5) est opéré afin d'arrêter le moteur du véhicule et, suivant lequel, ledit premier élément élastique (10) renvoie la poignée (2) à une première position axiale dans laquelle la partie accessible (2b) de la poignée (2) est en retrait à l'intérieure du rebord (1a) de la base (1) et ne peut pas être saisie., et un deuxième mouvement linéaire vers l'intérieur par le biais duquel le commutateur de démarrage/arrêt (5) est opéré afin de démarrer le moteur du véhicule et, suivant lequel, le premier élément élastique (10) renvoie la poignée (2) à une deuxième position axiale dans laquelle la partie accessible (2b) de la poignée (2) se projette depuis la base (1) et peut être saisie, lesdits premier et deuxième mouvements linéaires vers l'intérieur étant alternatifs d'une manière enchaînée.

6. Commande selon la revendication 5, **caractérisée en ce que** ledit commutateur de montée de rapport (6) et ledit commutateur de descente de rapport (7) sont montés à des positions diamétralement opposées sur une plaque (1 b) du rebord (1a) de la base (1), et la partie accessible (2b) de la poignée (2) comprend une première et une deuxième fixations (15, 16) qui sont adaptées pour être en regard, respectivement, des commutateurs de montée et de descente de rapport (6, 7) lorsque la poignée (2) est dans ladite seconde position axiale et dans une position angulaire (M), parmi les diverses positions angulaires (P, R, N, D, M), correspondant à un mode manuel de changement de vitesse, raison pour laquelle le commutateur de montée de rapport (6) est opéré par ladite première fixation (15) à cause d'un mouvement de balancement de la partie accessible (2b) de la poignée (2) autour du deuxième axe (4) dans une première direction depuis une position neutre centrale afin de générer au moins un signal de montée de rapport, et le commutateur de descente de rapport (7) est opéré par ladite deuxième fixation (16) à cause d'un mouvement de balancement de la partie accessible (2b) de la poignée (2) autour dudit deuxième axe (4) dans une deuxième direction opposée depuis ladite position neutre centrale afin de générer au moins un signal de descente de rapport.

7. Commande selon la revendication 6, **caractérisée en ce que** les mouvements de balancement de la partie accessible (2b) de la poignée (2) autour du deuxième axe (4) sont réalisés contre la poussée d'au moins un deuxième élément élastique (11) qui est disposé de manière à renvoyer la partie accessible (2b) de la poignée (2) à la position neutre centrale suivant l'opération de l'un ou l'autre des commutateurs de montée et de descente de rapport (6, 7).

8. Commande selon l'une quelconque des revendications précédentes, **caractérisée en ce qu'**elle comprend un dispositif de positionnement (9) uni au rebord (1a) de la base (1) et à la partie interne (2a) de la poignée (2) conçu pour fournir de la stabilité à la poignée (2) pour chacune desdites séries de positions angulaires (P, R, N, D, M) lorsque la poignée est tournée autour du premier axe (3).

9. Commande selon la revendication 8, **caractérisée en ce que** ledit dispositif de positionnement (9) comprend une série de conduits (17) parallèles au premier axe (3) formés sur une surface interne dudit rebord (1 a) de la base (1) dans des positions correspondant aux positions angulaires (P, R, N, D, M), un membre mobile (18) monté sur la partie interne (2a) de la poignée, et un troisième élément élastique (19) disposé de manière à pousser ledit membre mobile (18) vers la surface interne du rebord (1 a) de la base (1) afin d'insérer une extrémité arrondie du membre mobile (18) dans un desdits conduits (17) lorsque la poignée (2) est tournée autour du premier axe (3).

10. Dispositif selon l'une quelconque des revendications précédentes, **caractérisé en ce qu'**une surface externe de la partie accessible (2b) de la poignée (2) a un dispositif d'affichage (12) connecté à des éléments électroniques afin de montrer de l'information de changement concernant au moins deux caractéristiques relatives aux positions de la poignée (2).

11. Dispositif selon l'une quelconque des revendications précédentes, **caractérisé en ce qu'**il comprend des marques (14) correspondant à diverses positions angulaires (P, R, N, D, M) disposées sur une surface annulaire externe (13) de la base (1) autour de la poignée (2), et un élément indicateur associé au mouvement de rotation de la poignée (2) pour indiquer successivement chacune desdites marques (14) lorsque la poignée (2) est tournée autour du premier axe (3).

12. Dispositif selon la revendication 11, **caractérisé en ce que** ledit élément indicateur comprend des dispositifs électroluminescents (20), chacun associé à une des marques (14) et connectés aux éléments électroniques, lesdits dispositifs électroluminescents (20) pouvant s'illuminer sélectivement selon la position angulaire (P, R, N, D, M) de la poignée (2) détectée par le capteur de position angulaire (8).

13. Dispositif selon la revendication 12, **caractérisé en ce qu'**au moins un des dispositifs électroluminescents associés à une des marques (14) correspondant à une des positions angulaires (P) émet de la lumière d'une couleur différente de la lumière émise par les dispositifs électroluminescents associés au reste des marques (14).

14. Commande selon la revendication 5, **caractérisée en ce que** le commutateur de démarrage/arrêt (5), le capteur de position angulaire (8) et le premier élément élastique (10) sont intégrés dans le même composant.

15. Commande, selon l'une quelconque des revendications antérieurs, **caractérisée en ce que** sur le rebord (1a) de la base (1), est formée au moins une projection (21) que s'étend à l'intérieur d'un espace qui est axialement délimité par deux plaques annulaires (22) formées sur la périphérie de la partie interne (2a) de la poignée (2), cette projection (21) coopérant avec lesdites deux plaques annuaires (22) afin de limiter la trajectoire des mouvements linéaires de la poignée (2) dans la direction du premier axe (3).
